# EUROPEAN PATENT APPLICATION

(11) **EP 2 717 524 A1**
(43) Date of publication of application: **09.04.2014**
(21) Application number: 11867403.5
(22) Date of filing: 01.07.2011
(51) Int. Cl.: H04L 12/66

(54) **HEARTBEAT MESSAGE TRANSMISSION METHOD AND HEARTBEAT PROXY SERVER**

(71) Applicant: Huawei Technologies Co., Ltd, Shenzhen, Guangdong 518129 (CN)
(72) Inventor: LU, Wenzhuo, Shenzhen Guangdong 518129 (CN)
(74) Representative: Maiwald Patentanwalts GmbH
(86) International application number: PCT/CN2011/076769
(87) International publication number: WO 2012/167464

(57) **Abstract**

Embodiments of the present invention provide a method for sending a heartbeat message and a heartbeat proxy server, where the method for sending a heartbeat message includes: obtaining, by a heartbeat proxy server, a status of a terminal device; and deputizing, by the heartbeat proxy server, for the terminal device to send a heartbeat message to a server, or for the terminal device to respond to a heartbeat message sent from a server to the terminal device, when the terminal device is in an activated status. In the embodiments of the present invention, consumption of a resource of a network by the heartbeat message may be reduced, and an impact on the network may be reduced.

## Description

### TECHNICAL FIELD

Embodiments of the present invention relate to the field of communications technologies, and in particular, to a method for sending a heartbeat message and a heartbeat proxy server.

### BACKGROUND

In the field of a general packet radio service (General Packet Radio Service; hereinafter referred to as GPRS) mobile data service, data transmission between a terminal and a server is completed through a GPRS network.

In an actual application, some mobile phone operating systems and a large number of data applications adopt a heartbeat keepalive mechanism. When an operating system or software runs, due to existence of a heartbeat, data transmission is generated between a terminal and a server periodically and continuously.

Because the heartbeat generated by the terminal is periodical and uncontrolled, if a period duration is set to be short, or the number of activated terminals in a network is large, heartbeat messages in the network are large in number in this case, which consumes lots of resources of the network, and causes an impact on the network.

In addition, when the network is congested, because experience deteriorates, service traffic used by a user automatically decreases, and a network load may be improved. Because the heartbeat generated by the terminal is periodical and uncontrolled, if the terminal fails to send a heartbeat message, the terminal repeatedly attempts to resend the heartbeat message, thereby possibly aggravating congestion of the network instead when the network is congested.

### SUMMARY

Multiple aspects of the present invention provide a method for sending a heartbeat message and a heartbeat proxy server, to implement reduction of consumption of a resource of a network by a heartbeat message and reduction of an impact on the network.

In one aspect, the present invention provides a method for sending a heartbeat message, where the method includes:
obtaining, by a heartbeat proxy server, a status of a terminal device; and
deputizing, by the heartbeat proxy server, for the terminal device to send a heartbeat message to a server, or for the terminal device to respond to a heartbeat message sent from a server to the terminal device, when the terminal device is in an activated status.

In another aspect, the present invention provides a heartbeat proxy server, including:
a status obtaining module, configured to obtain a status of a terminal device; and
a message processing module, configured to deputize for the terminal device to send a heartbeat message to a server, or for the terminal device to respond to a heartbeat message sent from a server to the terminal device, when the terminal device is in an activated status.

In still another aspect, the present invention provides a system for sending a heartbeat message, where the system includes: a server and the heartbeat proxy server as described above.

Through the foregoing technical solutions, consumption of a resource of a network by a heartbeat message may be reduced, and an impact on the network may be reduced.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may still derive other drawings according to these accompanying drawings without creative efforts.
FIG. 1 is a schematic structural diagram of an embodiment of a method for sending a heartbeat message according to the present invention;
FIG. 2 is a schematic diagram of an embodiment of an application scenario according to the present invention;
FIG. 3 is a flowchart of an embodiment of querying, by a GGSN, an SGSN for a status of an MS according to the present invention;
FIG. 4 is a schematic diagram of an embodiment of a protocol stack according to the present invention;
FIG. 5 is a schematic structural diagram of an embodiment of a heartbeat proxy server according to the present invention;
FIG. 6 is a schematic structural diagram of another embodiment of a heartbeat proxy server according to the present invention;
FIG. 7 is a schematic structural diagram of an embodiment of a system for sending a heartbeat message according to the present invention; and
FIG. 8 is a schematic structural diagram of another embodiment of a system for sending a heartbeat message according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

Various technologies described herein may be used in various wireless communications systems, for example, a current second generation (Second Generation; hereinafter referred to as 2G) communications system and third generation (Third Generation; hereinafter referred to as 3G) communications system, and a next generation communications system, for example, a global system for mobile communications (Global System for Mobile communications; hereinafter referred to as GSM), a code division multiple access (Code Division Multiple Access; hereinafter referred to as CDMA) system, a time division multiple access (Time Division Multiple Access; hereinafter referred to as TDMA) system, wideband code division multiple access (Wideband Code Division Multiple Access; hereinafter referred to as WCDMA), a frequency division multiple access (Frequency Division Multiple Addressing; hereinafter referred to as FDMA) system, an orthogonal frequency-division multiple access (Orthogonal Frequency-Division Multiple Access; hereinafter referred to as OFDMA) system, a single carrier FDMA (Single Carrier FDMA; hereinafter referred to as SC-FDMA) system, a general packet radio service (General Packet Radio Service; hereinafter referred to as GPRS) system, and a long term evolution (Long Term Evolution; hereinafter referred to as LTE) system, and other communications systems of this type.

Various aspects are described with reference to a terminal and/or a base station and/or a base station controller herein.

The terminal may be a wireless terminal and may also be a wired terminal. The wireless terminal may refer to a device providing voice and/or data connectivity for a user, a handheld device with a wireless connection function, or other processing devices connected to a wireless modem. The wireless terminal may communicate with one or more core networks through a radio access network (Radio Access Network; hereinafter referred to as RAN). The wireless terminal may be a mobile terminal, for example, a mobile phone (or referred to as "cellular" phone), and a computer with a mobile terminal, which, for example, may be a mobile apparatus that is portable, pocket, handheld, built in a computer, or vehicle-mounted. The mobile apparatus exchanges a language and/or data with the radio access network. For example, the wired terminal may be a device such as a personal communication service (Personal Communication Service; hereinafter referred to as PCS) phone, a cordless phone, a session initiation protocol (Session Initial Protocol; hereinafter referred to as SIP) phone, a wireless local loop (Wireless Local Loop; hereinafter referred to as WLL) station, and a personal digital assistant (Personal Digital Assistant; hereinafter referred to as PDA). The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to a device that communicates with a wireless terminal through one or more sectors on an air interface in an access network. The base station may be configured to perform mutual conversion between a received air frame and an Internet protocol (Internet Protocol; hereinafter referred to as IP) packet, and act as a router between the wireless terminal and a rest part of the access network, where the rest part of the access network may include an IP network. The base station may also coordinate management on an attribute of the air interface. For example, the base station may be a base station (Base Transceiver Station; hereinafter referred to as BTS) in the GSM or the CDMA, may also be a base station (NodeB) in the WCDMA, and may also be an evolved base station in the LTE, where the evolved base station in the LTE includes a NodeB or an evolved base station (evolved NodeB; hereinafter referred to as eNB) or an evolutional base station (evolutional Node B; hereinafter referred to as e-NodeB), which is not limited in the present invention.

The base station controller may be a base station controller (Base Station Controller; hereinafter referred to as BSC) in the GSM or the CDMA, and may also be a radio network controller (Radio Network Controller; hereinafter referred to as RNC) in the WCDMA, which is not limited in the present invention.

In addition, terms "system" and "network" herein may be interchangeably used. A term "and/or" herein is only an association relationship for describing associated objects, and indicates that three relationships may exist. For example, A and/or B may indicate three cases: only A exists; both A and B exist; and only B exists. In addition, a character "/" herein generally indicates that the former and latter associated objects are in an "or" relationship.

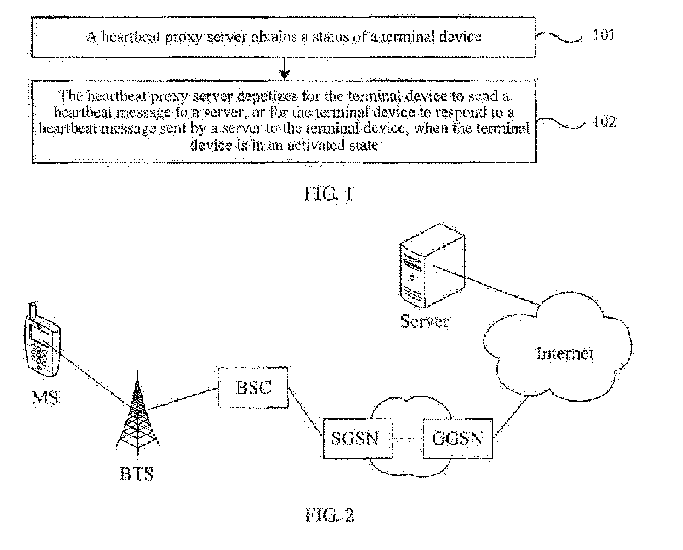

FIG. 1 is a schematic structural diagram of an embodiment of a method for sending a heartbeat message according to the present invention. As shown in FIG. 1, the method for sending a heartbeat message may be described as follows.
101: A heartbeat proxy server obtains a status of a terminal device.
102: The heartbeat proxy server deputizes for the terminal device to send a heartbeat message to a server, or for the terminal device to respond to a heartbeat message sent from a server to the terminal device, when the terminal device is in an activated status.

In the embodiment, after a heartbeat proxy server obtains a status of a terminal device, the heartbeat proxy server deputizes for the terminal device to send a heartbeat message to a server, or for the terminal device to respond to a heartbeat message sent from a server to the terminal device, when the terminal device is in an activated status, thereby reducing consumption of a resource of a network by the heartbeat message, and reducing an impact on the network.

The method for sending a heartbeat message provided in the embodiment shown in FIG. 1 of the present invention may be applied in an application scenario shown in FIG. 2. FIG. 2 is a schematic diagram of an embodiment of an application scenario according to the present invention.

In FIG. 2, a mobile station (Mobile Station; hereinafter referred to as MS) is a terminal device, and data transmission is performed between the MS and a server (Server) through a base station (Base Transceiver Station; hereinafter referred to as BTS), a base station controller (Base Station Controller; hereinafter referred to as BSC), a serving GPRS support node (Serving GPRS Support Node; hereinafter referred to as SGSN) and a gateway GPRS support node (Gateway GPRS Support Node; hereinafter referred to as GGSN).

In an implementation manner of the embodiment shown in FIG. 1 of the present invention, the obtaining, by a heartbeat proxy server, a status of a terminal device may be: The heartbeat proxy server sends a query request message to a core network node, where the query request message carries an identifier of the terminal device; then the heartbeat proxy server may receive a response message sent from the core network node, where the response message carries the status of the terminal device, where the status of the terminal device is determined, after the core network node queries a mobility management status and a packet data protocol (Packet Data Protocol; hereinafter referred to as PDP) activation status of the terminal device according to the identifier of the terminal device, by the core network node according to the mobility management status and the PDP activation status of the terminal device.

For example, the terminal device may be an MS; the core network node may be an SGSN in a GPRS system, a mobility management entity (Mobility Management Entity; hereinafter referred to as MME) in an LTE system, or a network entity implementing a function that is the same as or similar to that of an SGSN in other wireless communications systems, which is not limited in the embodiment of the present invention, but in description of the following embodiments of the present invention, that the core network node is the SGSN is taken as an example for description; the heartbeat proxy server may be disposed independently, or integrated with a GGSN in the GPRS system, a serving gateway (Serving Gateway; hereinafter referred to as SGW) in the LTE system, or the network entity implementing the function that is the same as or similar to that of the GGSN in other wireless communications systems. The embodiment of the present invention does not limit a disposing manner of the heartbeat proxy server, but in the following embodiments of the present invention, that the heartbeat proxy server is integrated with the GGSN is taken as an example for description. Reference may be made to FIG. 2 for a connection relationship between the MS, the SGSN, and the GGSN, and details are not repeatedly described herein. For example, an interactive message may be added to a GPRS tunneling protocol (GPRS Tunneling Protocol; hereinafter referred to as GTP) layer between the GGSN and the SGSN, and used for the GGSN to query the SGSN for a status of the MS. It needs to be noted that, in the embodiment of the present invention, the status of the MS means that the MS is in an activated status or a deactivated status.

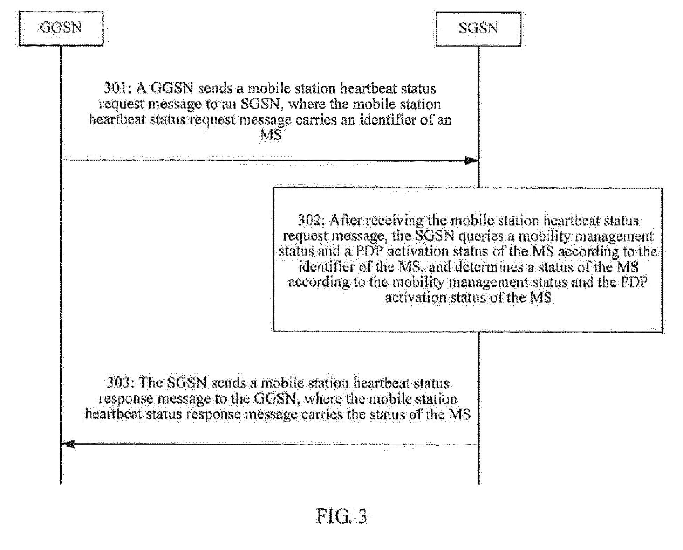

FIG. 3 is a flowchart of an embodiment of querying, by a GGSN, an SGSN for a status of an MS according to the present invention, as shown in FIG. 3.
301: A GGSN sends a mobile station heartbeat status request (MS Heartbeat Status Request) message to an SGSN, where the mobile station heartbeat status request message carries an identifier of an MS.

In this embodiment, the GGSN may send the mobile station heartbeat status request message to the SGSN when needing to actively deputize for the MS to send a heartbeat message to a server, or needing to deputize for the MS to respond to a heartbeat message sent from a server to the MS.

The identifier of the MS may be a character string and/or a numeral that may uniquely identify the MS, such as an international mobile subscriber identification number (International Mobile Subscriber Identification Number; hereinafter referred to as IMSI) of the MS or a number of the MS.
302: After receiving the mobile station heartbeat status request message, the SGSN queries a mobility management status and a PDP activation status of the MS according to the identifier of the MS, and determines the status of the MS according to the mobility management status and the PDP activation status of the MS.

For a GPRS network, the mobility management status and the PDP activation status of the MS are saved in the SGSN. After receiving the mobile station heartbeat status request message sent from the GGSN, the SGSN may query the mobility management status and the PDP activation status of the MS according to the identifier of the MS, and then determine the status of the MS according to the mobility management status and the PDP activation status of the MS, that is, determine whether the MS is in an activated status.

For example, the mobility management status includes three statuses, namely, a ready (Ready) status, a standby (Standby) status, and idle (Idle); the PDP activation status includes two statuses, namely, an activated (Activated) status and an deactivated (Deactive) status. When the mobility management status is Ready or Standby, and the PDP activation status is Activated, it may be determined that the MS is in the activated status. However, in other cases, it may be determined that the MS is in a deactivated status. For example, when the mobility management status is the Idle status, and the PDP activation status is the activated (Activated) status or the deactivated (Deactive) status, the SGSN may determine that the MS is in the deactivated status. For another example, when the mobility management status is the ready (Ready) status, the standby (Standby) status, or the idle (Idle) status, and the PDP activation status is the deactivated (Deactive) status, the SGSN may determine that the MS is in the deactivated status.
303: The SGSN sends a mobile station heartbeat status response (MS Heartbeat Status Response) message to the GGSN, where the mobile station heartbeat status response message carries the status of the MS.

In this way, after receiving the mobile station heartbeat status response message, the GGSN may learn the status of the MS, that is, learn whether the MS is in the activated status.

In another implementation manner of the embodiment shown in FIG. 1 of the present invention, the obtaining, by a heartbeat proxy server, a status of a terminal device may be: The heartbeat proxy server periodically queries a core network node for the status of the terminal device, and saves the status of the terminal device sent from the core network node. With reference to FIG. 2, that is to say, a GGSN may periodically query an SGSN for a status of an MS, and save the status of the MS sent from the SGSN. In this way, when needing to actively send a heartbeat message or needing to respond to a heartbeat message of a server, the GGSN does not need to query the SGSN again, but actively sends the heartbeat message or respond to the heartbeat message of the server directly according to the status of the MS saved currently by the GGSN. In this implementation manner, the status of the MS is also determined by the SGSN according to a mobility management status and a PDP activation status of the MS. For a specific implementation manner for determining the status of the MS according to the mobility management status and the PDP activation status of the MS, reference may be made to the manner provided by the embodiment shown in FIG. 3 of the present invention, and details are not repeatedly described herein.

In still another implementation manner of the embodiment shown in FIG. 1 of the present invention, the obtaining, by a heartbeat proxy server, a status of a terminal device may be: The heartbeat proxy server determines the status of the terminal device according to a PDP activation status of the terminal device saved by the heartbeat proxy server itself. With reference to FIG. 2, that is to say, a GGSN may determine a status of an MS according to a PDP activation status of the MS saved by the GGSN itself, but does not need to interact with an SGSN. For example, when the PDP activation status of the MS saved by the GGSN itself is activated, the GGSN may determine that the MS is in an activated status; when the PDP activation status of the MS saved by the GGSN itself is deactivated, the GGSN may determine that the MS is in a deactivated status.

In the foregoing three implementation manners, when the MS is in the activated status, the GGSN may obtain an Internet protocol (Internet Protocol; hereinafter referred to as IP) address of the MS corresponding to an identifier of the MS, construct the heartbeat message, and send the heartbeat message to the server. For a manner for constructing a heartbeat message, reference may be made to the description in the following embodiments, and details are not repeatedly described herein.

In the embodiment shown in FIG. 1 of the present invention, the deputizing, by the heartbeat proxy server, for the terminal device to send a heartbeat message to a server, or for the terminal device to respond to a heartbeat message sent from a server to the terminal device, when the terminal device is in an activated status may be one of the following three cases.
(1) The heartbeat proxy server sends a heartbeat message to the server or responds to a heartbeat message sent from the server, where the heartbeat message includes a heartbeat proxy (Heartbeat Proxy) layer packet header, where a value of the heartbeat proxy layer packet header indicates that the heartbeat message does not require the terminal device to participate in processing.
(2) The heartbeat proxy server receives uplink data sent from the terminal device, encapsulates a heartbeat proxy layer packet header for the uplink data to generate a heartbeat message, and sends the heartbeat message to the server, where a value of the heartbeat proxy layer packet header indicates that the heartbeat message requires the terminal device to participate in processing.
(3) The heartbeat proxy server receives a heartbeat message sent from the server, decapsulates the heartbeat message, and after deleting a heartbeat proxy layer packet header of the heartbeat message, sends the heartbeat message whose heartbeat proxy layer packet header is deleted to the terminal device, where a value of the heartbeat proxy layer packet header indicates that the heartbeat message requires the terminal device to participate in processing.

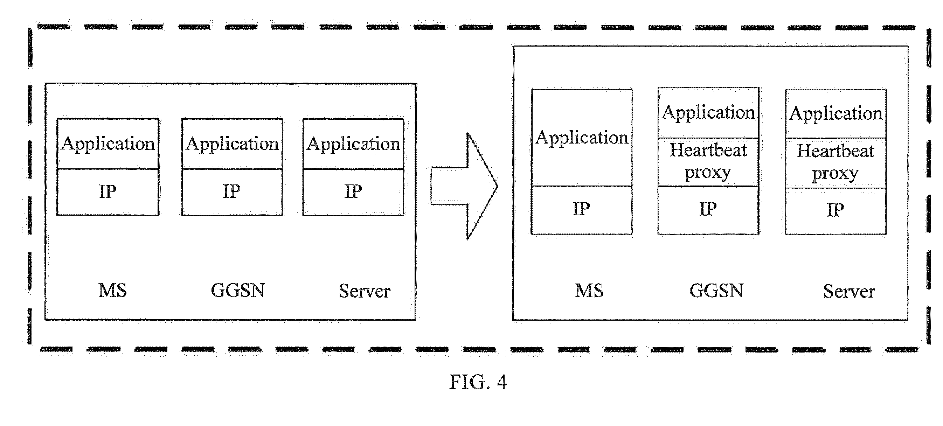

For example, the application scenario shown in FIG. 2 is taken as an example, and in the embodiment of the present invention, a heartbeat proxy layer packet header is added to a message exchanged between a server, a GGSN, and an MS. As shown in FIG. 4, FIG. 4 is a schematic diagram of an embodiment of a protocol stack according to the present invention. In FIG. 4, a value of a newly added heartbeat proxy layer packet header is used to identify whether a current heartbeat message requires the MS to participate in processing.

A structure of a message to which no heartbeat proxy layer packet header is added is as shown in Table 1. A structure of a message to which a heartbeat proxy layer packet header is added may be as shown in Table 2.

**Table 1**

| | | | | |
|---|---|---|---|---|
| 4-bit version | 4-bit first packet length | 8-bit service type | 16-bit total length (the number of bytes) | |
| 16-bit identifier | | | 3-bit flag | 13-bit offset |
| 8-bit time to live | | 8-bit protocol | 16-bit first packet checksum | |
| 32-bit source IP address | | | | |
| 32-bit destination IP address | | | | |
| Option | | | | |
| Application (Application) | | | | |

**Table 2**

| | | | | |
|---|---|---|---|---|
| 4-bit version | 4-bit first packet length | 8-bit service type | 16-bit total length | |
| 16-bit identifier | | | 3-bit flag | 13-bit offset |
| 8-bit time to live | | 8-bit protocol | 16-bit first packet checksum | |
| 32-bit source IP address | | | | |
| 32-bit destination IP address | | | | |
| Option | | | | |
| 32-bit heartbeat proxy | | | | |
| Application (Application) | | | | |

For example, when the MS is in the activated status, and no data needs to be transmitted between the MS and the server, the GGSN may deputize for the MS to generate a heartbeat message including a heartbeat proxy layer packet header and send the heartbeat message to the server, and may also deputize for the MS to respond to a heartbeat message including a heartbeat proxy layer packet header sent from the server to the MS. In this case, a value of the heartbeat proxy layer packet header of the heartbeat message needs to be set to a value that indicates that the heartbeat message does not require the MS to participate in processing, for example, "0".

For another example, when the MS is in the activated status, and data needs to be transmitted between the MS and the server, the GGSN may receive uplink data sent from the MS, encapsulate a heartbeat proxy layer packet header for the uplink data to generate a heartbeat message, and set a value of the heartbeat proxy layer packet header to a value that indicates that the heartbeat message requires the MS to participate in processing, for example, "1". Then, the GGSN may send the heartbeat message to the server.

For downlink data sent from the server to the MS, the server encapsulates a heartbeat proxy layer packet header for the downlink data to generate a heartbeat message, and sets a value of the heartbeat proxy layer packet header to a value that indicates that the heartbeat message requires the MS to participate in processing, for example, "1". Then, the server sends the heartbeat message to the GGSN. After receiving the heartbeat message, the GGSN decapsulates the heartbeat message, and after deleting the heartbeat proxy layer packet header of the heartbeat message, sends the heartbeat message whose heartbeat proxy layer packet header is deleted to the MS.

In the embodiment of the present invention, when a terminal device is in a deactivated status, a heartbeat proxy server may feed back to a server that the terminal device is in the deactivated status. With reference to FIG. 2, that is to say, when a GGSN sends a heartbeat message to the server or responds to a heartbeat message sent from the server, if the GGSN finds that an MS is in a deactivated status, the GGSN does not send the heartbeat message to the server, but may feed back, according to an agreement, to the server that the MS is in the deactivated status; if the GGSN finds that the MS is in an abnormal status (for example, a PDP activation status of the MS is deactivated), the GGSN does not send the heartbeat message to the server either, but may feed back, according to an agreement, to the server that the MS is in the abnormal status.

In addition, in the embodiment shown in FIG. 1 of the present invention, before the obtaining, by a heartbeat proxy server, a status of a terminal device, the terminal device may further report, to a core network node, that the terminal device supports a capability of a keepalive mechanism based on mobility management, so as to notify the core network node that the terminal device itself does not send a heartbeat message to a server or respond to a heartbeat message sent from a server anymore, but the heartbeat proxy server deputizes for the terminal device to send the heartbeat message to the server, or respond to the heartbeat message sent from the server.

Still the application scenario shown in FIG. 2 is taken as an example, and when a PDP is activated, an MS carries that the MS supports a capability of a keepalive mechanism based on mobility management in a PDP activation message, so as to report, to an SGSN, that the MS supports the capability of the keepalive mechanism based on the mobility management.

For example, a mobility management heartbeat support (Mobile Management Heartbeat Support; hereinafter referred to as MMH Support) field may be added to an activated PDP context request (Activated PDP Context Request) message sent from the MS to the SGSN, and is used to identify that the MS supports the capability of the keepalive mechanism based on the mobility management. A format of an activated PDP context request message to which the MMH Support field is added may be as shown in Table 3.

**Table 3**

| **Information Element (Information Element)** | **Presence (Presence)** | **Format (Format)** | **Length (Length)** |
|---|---|---|---|
| Protocol discriminator (Protocol discriminator) | Mandatory (Mandatory; hereinafter referred to as M) | Value (Value; hereinafter referred to as V) | 1/2 |
| Transaction identifier (Transaction identifier) | M | V | 1/2-3/2 |
| Activate PDP context request message identity (Activate PDP context request message identity) | M | V | 1 |
| Requested network service access point identifier (Requested Network Service Access Point Identifier; hereinafter referred to as Requested NSAPI) | M | V | 1 |
| Requested logical link control service access point identifier (Requested Logical Link Control Service Access Point Identifier; hereinafter referred to as Requested LLC SAPI) | M | V | 1 |
| Requested quality of service (Requested Quality of Service; hereinafter referred to as Requested QoS) | M | Length value (Length Value; hereinafter referred to as LV) | 13-17 |
| Requested PDP address (Requested PDP address) | M | LV | 3-23 |
| Access point name (Access point name) | Optional (Optional; hereinafter referred to as O) | Type length value (Type Length Value; hereinafter referred to as TLV) | 3-102 |
| Protocol configuration options (Protocol configuration options) | O | TLV | 3 - 253 |
| Request type (Request type) | O | Type value (Type Value; hereinafter referred to as TV) | 1 |
| MMH Support | O | TV | 1 |

The method for sending a heartbeat message provided by the embodiment of the present invention not only may be applied to a global system for mobile communications (Global System of Mobile Communication; hereinafter referred to as GSM) network, but also may be applied to a wireless network such as a universal mobile telecommunications system (Universal Mobile Telecommunications System; hereinafter referred to as UMTS) network, a time division-synchronous code division multiple access (Time Division-Synchronous Code Division Multiple Access; hereinafter referred to as TD-SCDMA) network, a code division multiple access (Code Division Multiple Access; hereinafter referred to as CDMA) network, and a long term evolution (Long Term Evolution; hereinafter referred to as LTE) network.

Persons of ordinary skill in the art may understand that all or part of steps for implementing the foregoing method embodiments may be completed by a program instructing relevant hardware, where the program may be stored in a computer readable storage medium, and when the program is executed, the steps including the foregoing method embodiments are performed; the storage medium includes various mediums that are capable of storing program codes, such as a ROM, a RAM, a magnetic disk, or an optical disk.

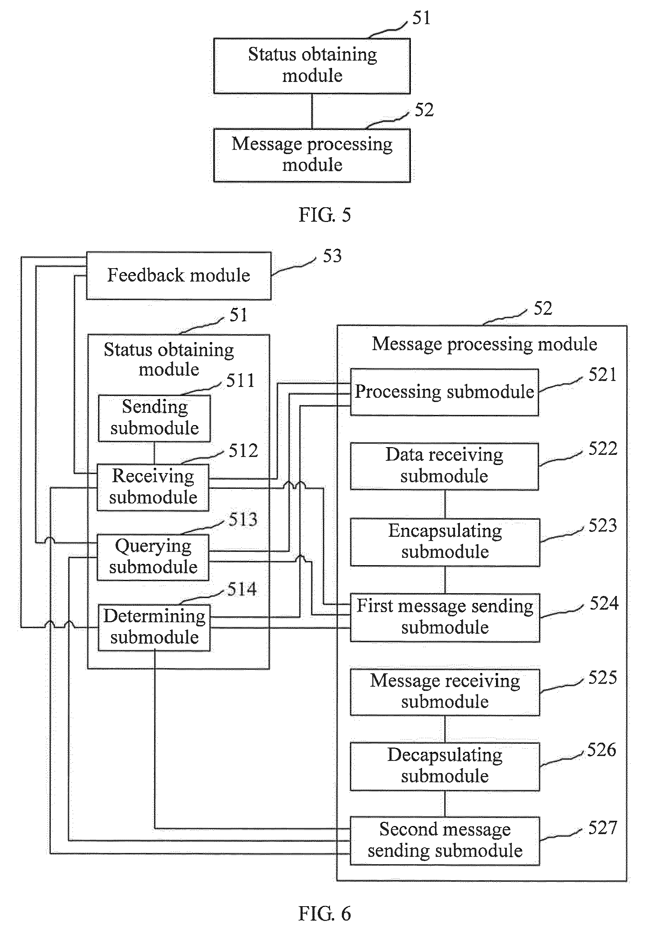

FIG. 5 is a schematic structural diagram of an embodiment of a heartbeat proxy server according to the present invention. The heartbeat proxy server in this embodiment may implement a process in the embodiment shown in FIG. 1 of the present invention. As shown in FIG. 5, the heartbeat proxy server may include a status obtaining module 51 and a message processing module 52.

The status obtaining module 51 is configured to obtain a status of a terminal device.

The message processing module 52 is configured to deputize for the terminal device to send a heartbeat message to a server, or for the terminal device to respond to a heartbeat message sent from a server to the terminal device, when the terminal device is in an activated status.

The heartbeat proxy server may be disposed independently, or integrated with a GGSN. The embodiment of the present invention does not limit a disposing manner of the heartbeat proxy server.

In the embodiment, after a status obtaining module 51 obtains a status of a terminal device, a message processing module 52 deputizes for the terminal device to send a heartbeat message to a server, or for the terminal device to respond to a heartbeat message sent from a server to the terminal device, when the terminal device is in an activated status, thereby reducing consumption of a resource of a network by the heartbeat message, and reducing an impact on the network.

FIG. 6 is a schematic structural diagram of another embodiment of a heartbeat proxy server according to the present invention. Compared with the heartbeat proxy server shown in FIG. 5, a difference lies in that, in the heartbeat proxy server shown in FIG. 6, a status obtaining module 51 may include a sending submodule 511 and a receiving submodule 512; or a status obtaining module 51 may include a querying submodule 513; or a status obtaining module 51 may include a determining submodule 514; or a status obtaining module 51 may include a sending submodule 511, a receiving submodule 512, a querying submodule 513, and a determining submodule 514; or a status obtaining module 51 may include a sending submodule 511, a receiving submodule 512, and a querying submodule 513; or a status obtaining module 51 may include a sending submodule 511, a receiving submodule 512, and a determining submodule 514; or a status obtaining module 51 may include a querying submodule 513 and a determining submodule 514.

The sending submodule 511 is configured to send a query request message to a core network node, where the query request message carries an identifier of a terminal device, so that the core network node queries a mobility management status and a PDP activation status of the terminal device according to the identifier of the terminal device, and determines a status of the terminal device according to the mobility management status and the PDP activation status of the terminal device.

The receiving submodule 512 is configured to receive a response message sent from the core network node, where the response message carries the status of the terminal device.

The querying submodule 513 is configured to periodically query the core network node for the status of the terminal device, and save the status of the terminal device sent from the core network node.

The determining submodule 514 is configured to determine the status of the terminal device according to the PDP activation status of the terminal device saved by the status obtaining module 51 itself.

For example, a message processing module 52 may include a processing submodule 521; or a message processing module 52 may include a data receiving submodule 522, an encapsulating submodule 523, and a first message sending submodule 524; or a message processing module 52 may include a message receiving submodule 525, a decapsulating submodule 526, and a second message sending submodule 527; or a message processing module 52 may include a processing submodule 521, a data receiving submodule 522, an encapsulating submodule 523, and a first message sending submodule 524; or a message processing module 52 may include a processing submodule 521, a message receiving submodule 525, a decapsulating submodule 526, and a second message sending submodule 527; or a message processing module 52 may include a processing submodule 521, a data receiving submodule 522, an encapsulating submodule 523, a first message sending submodule 524, a message receiving submodule 525, a decapsulating submodule 526, and a second message sending submodule 527; or a message processing module 52 may include a data receiving submodule 522, an encapsulating submodule 523, a first message sending submodule 524, a message receiving submodule 525, a decapsulating submodule 526, and a second message sending submodule 527.

The processing submodule 521 is configured to send a heartbeat message to a server or respond to a heartbeat message sent from a server, where the heartbeat message includes a heartbeat proxy layer packet header, where a value of the heartbeat proxy layer packet header indicates that the heartbeat message does not require the terminal device to participate in processing.

The data receiving submodule 522 is configured to receive uplink data sent from the terminal device.

The encapsulating submodule 523 is configured to encapsulate a heartbeat proxy layer packet header for the uplink data received by the data receiving submodule 522, so as to generate a heartbeat message.

The first message sending submodule 524 is configured to send the heartbeat message to the server, where a value of the heartbeat proxy layer packet header indicates that the heartbeat message requires the terminal device to participate in processing.

The message receiving submodule 525 is configured to receive a heartbeat message sent from the server.

The decapsulating submodule 526 is configured to decapsulate the heartbeat message received by the message receiving submodule 525, and delete the heartbeat proxy layer packet header of the heartbeat message.

The second message sending submodule 527 is configured to send the heartbeat message whose heartbeat proxy layer packet header is deleted to the terminal device, where the value of the heartbeat proxy layer packet header indicates that the heartbeat message requires the terminal device to participate in processing.

In another embodiment of the present invention, the heartbeat proxy server may further include a feedback module 53, configured to, when the terminal device is in a deactivated status, feed back to a server that the terminal device is in the deactivated status.

The heartbeat proxy server may reduce consumption of a resource of a network by the heartbeat message, and reduce an impact on the network.

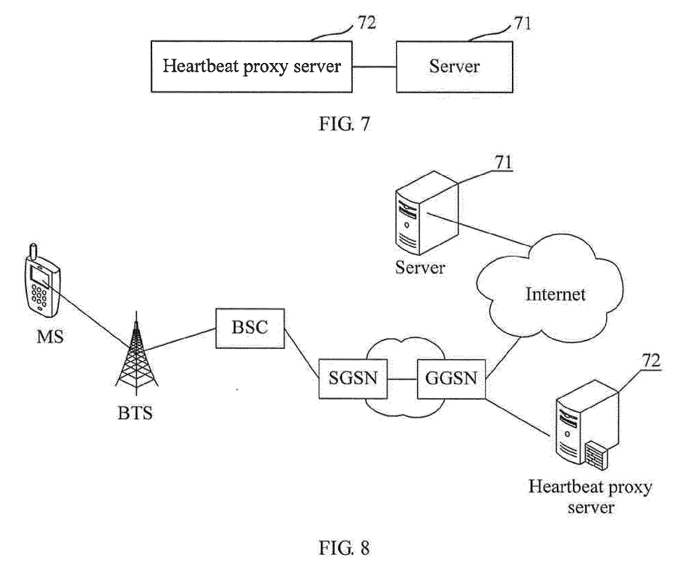

FIG. 7 is a schematic structural diagram of an embodiment of a system for sending a heartbeat message according to the present invention. As shown in FIG. 7, the system for sending a heartbeat message may include a server 71 and a heartbeat proxy server 72.

The server 71 is configured to receive a heartbeat message sent from the heartbeat proxy server 72 or send a heartbeat message to the heartbeat proxy server 72.

The heartbeat proxy server 72 is configured to obtain a status of a terminal device, and deputize for the terminal device to send a heartbeat message to the server 71, or for the terminal device to respond to a heartbeat message sent from the server 71 to the terminal device, when the terminal device is in an activated status. For example, the heartbeat proxy server 72 may be implemented through the heartbeat proxy server shown in FIG. 5 or FIG. 6 of the present invention.

For example, the heartbeat proxy server 72 may be disposed independently, or integrated with a GGSN. The embodiment of the present invention does not limit a disposing manner of the heartbeat proxy server. When being disposed independently, the heartbeat proxy server 72 may form a system shown in FIG. 8 together with a device such as the server 71, a terminal device (for example, an MS), a base station, and a core network node (for example, an SGSN). FIG. 8 is a schematic structural diagram of another embodiment of a system for sending a heartbeat message according to the present invention.

When being integrated with the GGSN, the heartbeat proxy server 72 may likewise form a system that has a structure shown in FIG. 2 with a device such as the server 71, a terminal device (for example, an MS), a base station, and a core network node (for example, an SGSN).

The system for sending a heartbeat message may reduce consumption of a resource of a network by the heartbeat message, and reduce an impact on the network.

Persons skilled in the art may understand that the accompanying drawings are merely schematic diagrams of an exemplary embodiment, and modules or processes in the accompanying drawings are not necessarily required in implementing the present invention.

Persons skilled in the art may clearly understand that, for the purpose of convenient and brief description, for a detailed working process of the foregoing system, apparatus, and unit, reference may be made to the corresponding process in the foregoing method embodiments, and details are not repeatedly described herein.

In the several embodiments provided in the present application, it should be understood that the disclosed system, apparatus, and method may be implemented in other manners. For example, the apparatus embodiment described above is merely exemplary. For example, dividing of the units is merely a kind of logical function dividing, and there may be other dividing manners in actual implementation. For example, a plurality of units or components may be combined or may be integrated to another system, or some characteristics may be ignored or not executed. In addition, the shown or discussed mutual couplings or direct couplings or communication connections may be implemented through some interfaces. The indirect couplings or communication connections between the apparatuses or units may be implemented in electronic, mechanical, or other forms.

Modules described as separate components may be or may not be physically separated. Components shown as modules may be or may not be physical modules, that is, may be located in one place, or distributed to a plurality of network units. A part or all of the modules may be selected according to actual needs to achieve the objectives of the solutions of the embodiments.

In addition, function modules in the embodiments of the present invention may be integrated into a processing module, or each of the modules may exist alone physically, or two or more modules are integrated into a module. The integrated module may be implemented in a form of hardware, or may be implemented in a form of a software functional unit.

When the integrated module is implemented in a form of a software functional unit and sold or used as an independent product, the integrated module may be stored in a computer-readable storage medium. Based on such understanding, the technical solutions of the present invention essentially, or the part contributing to the prior art, or all or a part of the technical solutions may be embodied in a form of a software product. The computer software product is stored in a storage medium, and includes several instructions for instructing a computer device (which may be a personal computer, a server, or a network device, or the like) to perform all or a part of the steps of the methods described in the embodiments of the present invention. The foregoing storage medium includes: any medium that is capable of storing program codes, such as a USB flash disk, a removable hard disk, a read-only memory (Read-Only Memory, hereinafter referred to as ROM), a random access memory (Random Access Memory, hereinafter referred to as RAM), a magnetic disk, or an optical disk.

The foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features of the technical solutions described in the foregoing embodiments; however, these modification or replacements do not make the essence of the corresponding technical solution depart from the spirit and scope of the technical solutions of the embodiments of the present invention.

## Claims

1. A method for sending a heartbeat message, **characterized in** comprising:
obtaining, by a heartbeat proxy server, a status of a terminal device; and
deputizing, by the heartbeat proxy server, for the terminal device to send a heartbeat message to a server, or for the terminal device to respond to a heartbeat message sent from a server to the terminal device, when the terminal device is in an activated status.

2. The method according to claim 1, **characterized in that** the obtaining, by the heartbeat proxy server, the status of the terminal device comprises:
sending, by the heartbeat proxy server, a query request message to a core network node, wherein the query request message carries an identifier of the terminal device; and
receiving, by the heartbeat proxy server, a response message sent from the core network node, wherein the response message carries the status of the terminal device, wherein the status of the terminal device is determined, after the core network node queries a mobility management status and a packet data protocol activation status of the terminal device according to the identifier of the terminal device, by the core network node according to the mobility management status and the packet data protocol activation status of the terminal device.

3. The method according to claim 1, **characterized in that** the obtaining, by the heartbeat proxy server, the status of the terminal device comprises:
periodically querying, by the heartbeat proxy server, a core network node for the status of the terminal device, and saving the status of the terminal device sent from the core network node.

4. The method according to claim 1, **characterized in that** the obtaining, by the heartbeat proxy server, the status of the terminal device comprises:
determining, by the heartbeat proxy server, the status of the terminal device according to a packet data protocol activation status of the terminal device saved by the heartbeat proxy server itself.

5. The method according to claim 1, **characterized in that** the deputizing, by the heartbeat proxy server, for the terminal device to send the heartbeat message to the server, or for the terminal device to respond to the heartbeat message sent from the server to the terminal device comprises:
sending, by the heartbeat proxy server, a heartbeat message to the server or responding to a heartbeat message sent from the server, wherein the heartbeat message comprises a heartbeat proxy layer packet header, wherein a value of the heartbeat proxy layer packet header indicates that the heartbeat message does not require the terminal device to participate in processing.

6. The method according to claim 1, **characterized in that** the deputizing, by the heartbeat proxy server, for the terminal device to send the heartbeat message to the server comprises:
receiving, by the heartbeat proxy server, uplink data sent from the terminal device;
encapsulating a heartbeat proxy layer packet header for the uplink data to generate a heartbeat message; and
sending the heartbeat message to the server, wherein a value of the heartbeat proxy layer packet header indicates that the heartbeat message requires the terminal device to participate in processing.

7. The method according to claim 1, **characterized in that** the deputizing, by the heartbeat proxy server, for the terminal device to respond to the heartbeat message sent from the server to the terminal device comprises:
receiving, by the heartbeat proxy server, a heartbeat message sent from the server;
decapsulating the heartbeat message; and
after deleting a heartbeat proxy layer packet header of the heartbeat message, sending the heartbeat message whose heartbeat proxy layer packet header is deleted to the terminal device, wherein a value of the heartbeat proxy layer packet header indicates that the heartbeat message requires the terminal device to participate in processing.

8. The method according to claim 1, **characterized in** further comprising:
when the terminal device is in a deactivated status, feeding back, by the heartbeat proxy server, to the server that the terminal device is in the deactivated status.

9. The method according to any one of claims 1 to 8, **characterized in that** before the obtaining, by the heartbeat proxy server, the status of the terminal device, the method further comprises:
reporting, by the terminal device, to the core network node, that the terminal device supports a capability of a keepalive mechanism based on mobility management.

10. A heartbeat proxy server, **characterized in** comprising:
a status obtaining module, configured to obtain a status of a terminal device; and
a message processing module, configured to deputize for the terminal device to send a heartbeat message to a server, or for the terminal device to respond to a heartbeat message sent from a server to the terminal device, when the terminal device is in an activated status.

11. The heartbeat proxy server according to claim 10, **characterized in that** the status obtaining module comprises:
a sending submodule, configured to send a query request message to a core network node, wherein the query request message carries an identifier of the terminal device, so that the core network node queries a mobility management status and a packet data protocol activation status of the terminal device according to the identifier of the terminal device, and determines the status of the terminal device according to the mobility management status and the packet data protocol activation status of the terminal device; and
a receiving submodule, configured to receive a response message sent from the core network node, wherein the response message carries the status of the terminal device.

12. The heartbeat proxy server according to claim 10, **characterized in that** the status obtaining module comprises:
a querying submodule, configured to periodically query a core network node for the status of the terminal device, and save the status of the terminal device sent from the core network node.

13. The heartbeat proxy server according to claim 10, **characterized in that** the status obtaining module comprises:
a determining submodule, configured to determine the status of the terminal device according to a packet data protocol activation status of the terminal device saved by the heartbeat proxy server itself.

14. The heartbeat proxy server according to claim 10, **characterized in that** the message processing module comprises:
a processing submodule, configured to send a heartbeat message to the server or respond to a heartbeat message sent from the server, wherein the heartbeat message comprises a heartbeat proxy layer packet header, wherein a value of the heartbeat proxy layer packet header indicates that the heartbeat message does not require the terminal device to participate in processing.

15. The heartbeat proxy server according to claim 10, **characterized in that** the message processing module comprises:
a data receiving submodule, configured to receive uplink data sent from the terminal device;
an encapsulating submodule, configured to encapsulate a heartbeat proxy layer packet header for the uplink data received by the data receiving submodule, so as to generate a heartbeat message; and
a first message sending submodule, configured to send the heartbeat message to the server, wherein a value of the heartbeat proxy layer packet header indicates that the heartbeat message requires the terminal device to participate in processing.

16. The heartbeat proxy server according to claim 10, **characterized in that** the message processing module comprises:
a message receiving submodule, configured to receive a heartbeat message sent from the server;
a decapsulating submodule, configured to decapsulate the heartbeat message received by the message receiving submodule, and delete a heartbeat proxy layer packet header of the heartbeat message; and
a second message sending submodule, configured to send the heartbeat message whose heartbeat proxy layer packet header is deleted to the terminal device, wherein a value of the heartbeat proxy layer packet header indicates that the heartbeat message requires the terminal device to participate in processing.

17. The heartbeat proxy server according to claim 10, **characterized in** further comprising:
a feedback module, configured to, when the terminal device is in a deactivated status, feed back to the server that the terminal device is in the deactivated status.

18. A system for sending a heartbeat message, **characterized in** comprising a server and the heartbeat proxy server according to any one of claims 10 to 17.
